# EUROPEAN PATENT SPECIFICATION

(11) **EP 1 104 519 B1**
(45) Date of publication and mention of the grant of the patent: **12.04.2006**
(21) Application number: 99941321.4
(22) Date of filing: 18.08.1999
(51) Int. Cl.: F16K 5/06

(54) **BALL VALVE**
KUGELHAHN
ROBINET A BOISSEAU SPHERIQUE

(30) Priority: 19.08.1998 AU PP535598
(43) Date of publication of application: 06.06.2001
(73) Proprietor: PHILMAC PTY. LTD., North Plympton, S.A. 5037 (AU)
(72) Inventor: ROSZKOWSKI, Bogdan, Morphett Vale, S.A. 5162 (AU); CHELCHOWSKI, David, Largs Bay, S.A. 5016 (AU)
(74) Representative: Burrows, Anthony Gregory
(86) International application number: PCT/AU1999/000666
(87) International publication number: WO 2000/011381

(56) References cited:
- EP-A- 0 067 334
- DE-A- 3 816 887
- DE-B- 1 122 788
- DE-U- 29 800 348
- GB-A- 1 220 624
- GB-A- 2 062 177
- GB-A- 2 199 119
- US-A- 4 150 810

## Description

The invention relates to a valve member for a valve of the ball valve type.

### BACKGROUND OF THE INVENTION

GB-A-1220624 discloses a valve and has a valve body portion defining a valve chamber. The valve body portion is formed with an inlet or outlet flow passage in fluid communication with the valve chamber. The valve body may be provided with a flange structure or it may be provided with a weld end construction for either bolted or welded connection respectively of the valve to a pipeline or other conduit structure. An end closure portion of the valve is retained in sealed assembly with the valve body portion by a series of bolts or threaded studs and defines a closure for the valve chamber. The end closure is formed with an inlet or outlet flow passage which is disposed in axial alignment with the flow passage of the valve body portion. The end closure is provided with a flanged structure for bolted connection thereof to a pipeline. Furthermore, the valve body is provided with a pressure relief fitting for bleeding body pressure to the atmosphere as required. The valve body is also formed with upper and lower aligned apertures, which receive upper and lower trunnions therein. A substantially spherical plug member is provided with upper and lower trunnion apertures which receive the upper and lower trunnions to maintain alignment of the spherical plug within the valve body. To establish a seal between the rotatable spherical plug member and the valve body a pair of annular seat assemblies are retained respectively within annular seat pockets formed about the aforementioned flow passages. The seat assemblies include a sealing portion which is disposed for sealing engagement with the spherical working surface of the ball member. The plug member comprises a tubular conduit, the internal walls of which define a further flow passage. A pair of axially aligned trunnion bosses are connected to the tubular conduit by welding or the like and are disposed in substantially normal relationship with the longitudinal axis of the tubular conduit. The trunnions are received within the trunnion apertures to provide for support of the ball and to provide for driving connection between an operating stem and the ball structure. A plurality of structural segments are fixed by welding or the like to the tubular conduit and to the respective one of the upper and lower trunnion boss members. Each of these segments is provided with an arcuate edge surface which, in assembly with the conduit and trunnion structures, co-operates to define a partition disposed in substantial alignment with the longitudinal axis of the tubular conduit. The partition divides the internal cavity of the ball into two pressure balancing chambers. A pair of substantially identical substantially hemispherical shells are provided for connection to the tubular conduit, the trunnion bosses and the segment structure to define the substantially spherical exterior configuration of the plug member. Each of the hemispherical shells is provided with four arcuate surfaces defining segments of a circle. When the hemispherical shells are placed in assembly with the conduit, trunnion and segment structures, each of the hermispherical shells will be disposed in abutment or in juxtaposition one with the other. This relationship effectively promotes interconnection of the structural elements of the valve ball by circumferential welds. Subsequent to fabrication of the spherical plug, the trunnion bosses are machined to the proper dimension, alignment and surface configuration to receive the trunnions of the valve. After completion of the fabrication process, the substantially spherical surface is subjected to light machining and surface preparation to provide a sealing surface of proper tolerance for sealing engagement with the seat members of the valve.

Ball valves manufactured form plastic material are known. These valves incorporate a rotatable plastic ball adapted to close off a throughbore. The ball has a central hole or aperture roughly equal to the throughbore of the valve. The ball is encapsulated between valve seats which comprise two ring seals mounted inside a valve body. The external surface of the ball has a part spherical shape around the area in contact with the seals. The spherical surface of the ball must not have any distortions and requires a high quality surface finish in order to achieve proper sealing.

In conventional plastic ball valves the ball is of a single configuration that is injection moulded. After moulding the ball needs to be machined, because due to its geometry it is impossible to obtain a spherical shape of the external surface in the injection molding process. Frequently there is an additional operation required, to improve the surface finish of external surface of the ball. Plastics used to produce the ball are often very expensive, because they must fulfil strict requirements of high wear resistance and low coefficient of friction. As a result the process of producing a plastic ball valve ball is inefficient and costly.

The object of the invention is to provide a new and improved ball or valve member for a valve of the ball valve type, that has reduced manufacturing cost or at least provides the public with a useful alternative.

### SUMMARY OF THE INVENTION

According to one aspect of the present invention, there is provided a valve member for a valve of the ball valve type comprising a frame having a flow passage and having two sets of attachment means on opposing sides, the valve member having a sealing surface on at least one side spaced apart from said flow passage, and means on said valve member for engagement of a drive mechanism to enable rotation of the valve member in the valve, characterized in that said valve member includes at least two parts each having a set of lugs adapted to engage said frame attachment means in a snap-fit arrangement to form said valve member.

In a preferred form said two parts are identical.

In a preferred form said valve member includes a pair of opposed sealing surfaces.

In a preferred form said two parts are hemispherical shells.

In a preferred form the frame further includes a tube portion to provide a smooth flow path.

In a preferred form said parts in the region of the sealing surfaces are comprised of constant thickness of material to provide smoothness of the sealing surfaces.

In a preferred form the at least two parts are adapted to encapsulate said frame.

There may be provided interengaging means on the shell parts and frame separate from any connection arrangements to enable rotational forces to be transferred between the parts.

In a preferred form the frame further includes a projection means on opposing sides of the frame for positive location of each said part.

In a preferred form said projection means are X type structures.

In a preferred form each part has a recess adapted to engage said projection means to assist in transfer of rotation forces from the frame to the parts.

In a preferred form the three component parts are manufactured by injection moulding.

Preferably, there is provided a valve member for a fluid control device, said device including a drive mechanism , said valve member comprising a frame member having at least first and second sides and a flow passage therethrough, said frame member including a first set of attachment means disposed on said first side and a second set of attachment means disposed on said second side, at least first and second shells, said first and second shells having a substantially hemispherical shape, said first shell including first engagement means adapted to engage said first set of attachment means, said second shell including second engagement means adapted to engage said second set of attachment means, said first and second shells being adapted to substantially encapsulate said frame member when said first engagement means interlockingly engages said first set of attachment means and said second engagement means interlockingly engages said second set of attachment means, a first sealing surface disposed on at least said first shell, and drive engagement means adapted to engage said drive mechanism to enable rotation of said valve member in said fluid control device.

In a preferred form of the invention, the shells indude inter-engaging locking means to engage the respective parts of the valve member to join the parts.

In another form of the invention there is provided a valve assembly of the ball valve type including an inlet and an outlet including a valve member as described in any of the embodiments above, wherein a ball valve member is adapted to rotate between a first position and a second position in the valve assembly wherein in said first position a flow path through the valve member is substantially coaxial to a pipe and in the second position the flow path through the valve member is substantially transverse to the pipe.

An advantage of this invention, owing to the two aspects above, is that a valve member, such as a ball valve member is made from only three components parts two of which are identical. This makes the manufacture and assembly of the valve member relatively simple and inexpensive. Furthermore, each of the component parts can be replaced when damaged, instead of replacement of the whole unit as in the prior art devices.

### BRIEF DESCRIPTION OF THE DRAWINGS

- Figure 1: depicts a ball valve assembly of the prior art;
- Figures 2A-2D: depict orthogonal views of the valve member of the present invention in assembled and disassembled views;
- Figures 3A and 3B: are perspective views of the components of the valve member of the present invention, in assembled and disassembled views; and
- Figures 4A and 4B: depict a second embodiment of the invention.

### DETAILED DESCRIPTION OF THE DRAWINGS

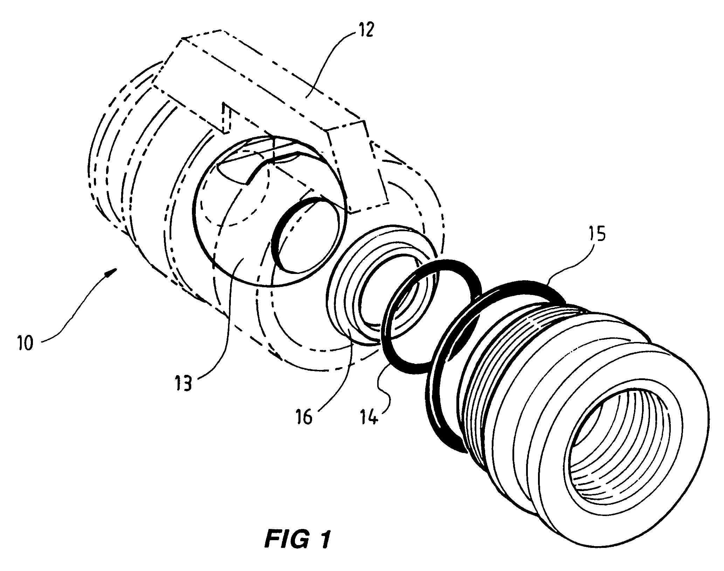

Turning now to the drawings in detail there is shown in Figure 1 shows a ball valve assembly with a prior art ball. The ball valve assembly 10 has a handle 12 to rotate the ball 13 by means of slot, O rings 14, 15 and a ball seat 16. It shows the prior art ball 13 comprised of a single piece construction. The drawback of this apparatus is mostly one of cost. The ball itself is costly and time consuming to manufacture. It is moulded as a single configuration and after moulding requires machining to obtain the correct shape. Often further finishing operation is required to improve the surface finish of the external surface of the ball.

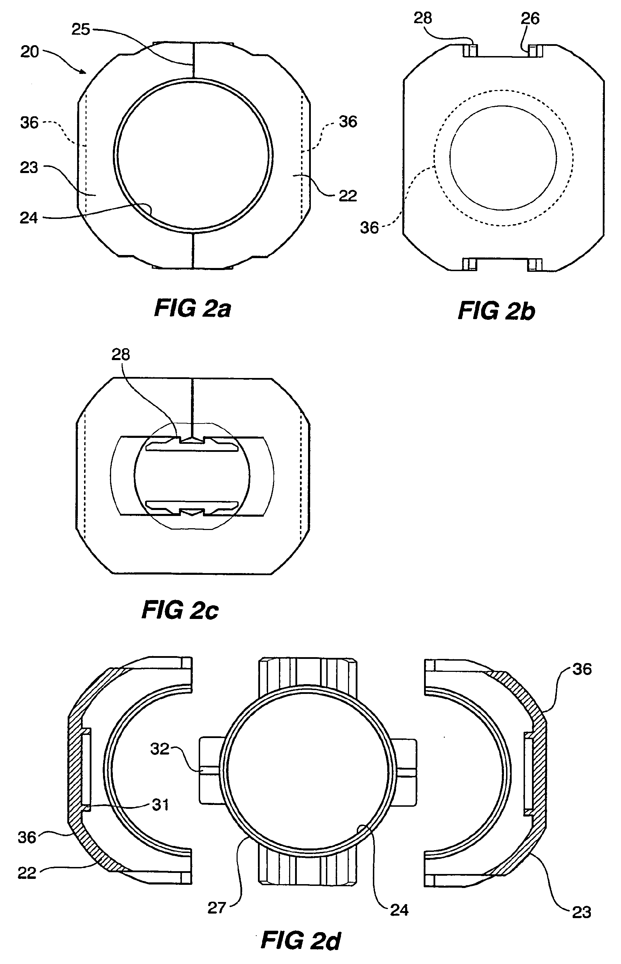

These difficulties are overcome in the ball for a ball valve of the present invention, the best method known to the applicant shown in Figures 2A-2C and exploded view Figure 2D. Figure 2A shows an assembled form of the valve member 20 in side view, with preferably identical parts 22 and 23 joined together at 25 to form the valve member 20. The dotted line depicts sealing surfaces 36 upon which a valve seat of a valve assembly sits. These sealing surfaces are circular and one is formed on each of the two parts 22 and 23, see also Figure 2B.

Bore 24 provides a flow passage through the ball valve 20. Drive transfer mechanism 26 enables the handle of the valve assembly (shown in Figure 1) to engage the valve member for rotational movement. Inter-engaging locking means 28 are provided on at least two opposing sides of a frame 27 to engage the respective parts of the valve member in a snap fit arrangement. Inter-engaging locking means 28 are also used to rotatably drive the ball.

Figure 2C shows in greater detail the inter-engaging locking means 28 which enables the two parts 22 and 23 of the ball valve to be snap fit. The handle (not shown) is then able to lock into position and engage drive mechanism 26 to rotate the valve member from an open to a closed position when positioned in a pipe (not shown). Once in the open position a flow passage is established with alignment of the bore 24 and the pipe thereby enabling fluid (such as water) to flow. In the closed position the flow passage is not established as the sealing surfaces are rotated to align with the pipe and thereby shut off any passage of fluid.

Turning now to Figure 2D which shows the components of the valve member in detail. The two parts are preferably identical and spherical in shape forming two spherical shells 22 and 23. Since they are identical they can be manufactured from the one die simplifying the manufacturing and assembly process. The shells include sealing surfaces 36 as depicted in the earlier Figures, and are located on opposed sides of the valve member and seal against the valve seat assembly when in use. The frame 27 includes bore 24 which provides a flow passage from one side of the valve member to another side, and such that engagement of the drive mechanism with the handle enables rotation of the valve member to present a pair of sealing surfaces or alternatively flow surfaces to a fluid supply.

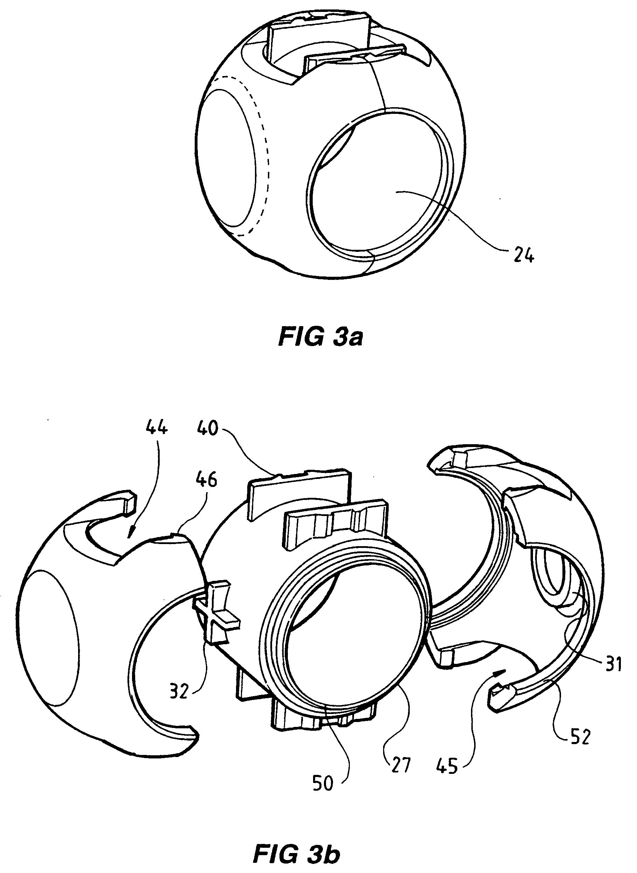

Encapsulation of the frame by the ball valve parts is shown in Figure 3A, whereby alignment of the two parts ensures establishment of a throughbore to allow for the passage of fluid when the valve member is used in conjunction with a ball valve. It is however to be understood that the frame does not need to be wholly encapsulated by the shells. At times it may be advantageous to have the shells engage said frame without having to encapsulate it.

Greater detail of the components is shown in Figure 3B, in which the frame 27 includes a set of flanges 40 provided on opposing sides of the frame, which include engagement means that function to receive corresponding parts of the shells including hook means 46 on the parts, to effect encapsulation of the frame 27 by the two spherical shells. Projection means 32 are located on opposing sides of the frame for positive location of the shell with respect to the frame and are shown as X type structures protruding from opposing faces of the frame. The projection means may however be of any configuration sufficient to achieve the necessary location and drive of the frame to the spherical shells.

Recess 31 on the shell 22, 23 engage with projections 32 on the frame 27 to enable transfer of rotational forces from the frame to the shells.

The spherical shells each have cutouts 44 and 45, said cutouts being semicircular in shape. The shells also include hook means 46 at the periphery of at least two opposing cutouts 44 whereby the hook means engage with engagement means of the flange of the frame in a snap fit action.

In addition the frame includes a ridge 50 extending the full circumference of said edge, these ridges engage with corresponding grooves 52 in each of the two spherical shells, to thereby enhance and strengthen the joining of the components of the valve member. The frame is thereby able to be encapsulated by the snap fit action of the two spherical shells to form a valve member for a valve of the ball valve type.

All components of the valve member can be injection moulded to provide an economic alternative to the prior art.

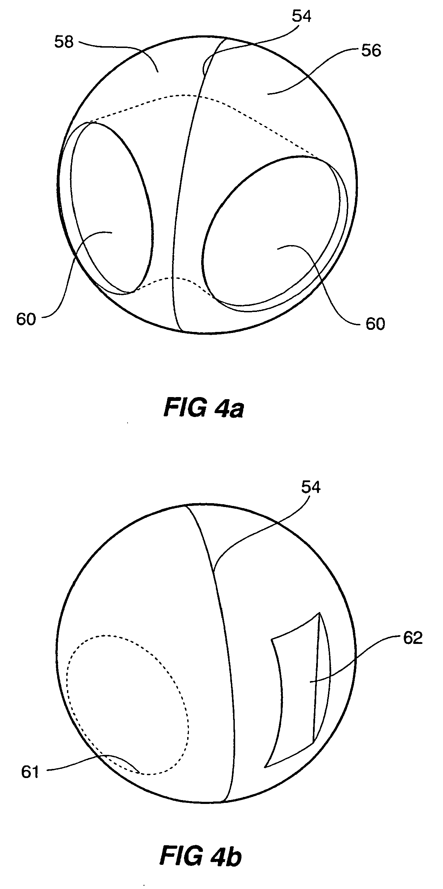

Another embodiment of the invention is illustrated in Figures 4A and 4B. These figures depict a configuration of the valve member wherein the ball is formed from shells 56 and 58 and the throughbore 60 in the frame is at approximately 90 degrees forming a corner valve. It may be noted that the valve seat of the ball valve assembly which engages the sealing surface 61 does not cover the join 54 of the two spherical shells, as the join 54 would prevent the seal between the valve seat and the valve member. The drive mechanism can engage into slot 62 in the ball assembly.

This ball valve assembly of the present invention can also be applied with a throughbore having more that two apertures.

Throughout this specification the purpose has been to illustrate the invention not to limit this.

## Claims

1. A valve member (20) for a valve of the ball valve type comprising:
a frame (27) having a flow passage (24) and having two sets of attachment means (28) on opposing sides;
the valve member (20) having a sealing surface (36) on at least one side spaced apart from said flow passage (24); and
means (28) on said valve member (20) for engagement of a drive mechanism (26) to enable rotation of the valve member (20) in the valve;
**characterized in that**
said valve member (20) includes at least two parts (22,23) each having a set of lugs (46) adapted to engage said frame attachment means (28) in a snap-fit arrangement to form said valve member (20).

2. A valve member (20) as in Claim 1 wherein said at least two parts (22,23) are identical.

3. A valve member (20) as in either one of Claim 1 or Claim 2 wherein said valve member (20) includes a pair of opposed sealing surfaces (36).

4. A valve member (20) as in any one of the above claims wherein said at least two parts (22,23) are hemispherical shells.

5. A valve member (20) as in any one of the above claims wherein the frame (27) further includes a tube portion to provide a smooth flow path.

6. A valve member (20) as in any one of the above claims wherein said at least two parts (22,23) in the region of the or each sealing surface (36) are comprised of constant thickness of material to provide smoothness of the sealing surface (36).

7. A valve member (20) as in any one of the above claims wherein said at least two parts (22,23) are adapted to encapsulate said frame (27).

8. A valve member (20) as in any one of the claims wherein said frame (27) further includes a projection means (32) on opposing sides of the frame for positive location of each of said at least two parts (22,23).

9. A valve member (20) as in Claim 8 wherein said projection means (32) are X type structures.

10. A valve member (20) as in either one of Claim 8 or Claim 9 wherein each of said at least two parts (22,23) has a recess (31) adapted to engage said projection means (32) to assist In transfer of rotation forces from the frame (27) to the parts (22,23).

11. A valve member (20) as in any one of the above claims wherein the said at least two parts (22,23) and the frame (27) are manufactured by injection moulding.

12. A valve (10) of the ball valve type including an inlet and an outlet including a valve member (20) as described in any of the embodiments above, wherein a ball valve member (20) is adapted to rotate between a first position and a second position in the valve (10) wherein in said first position a flow path through the valve member (20) is substantially coaxial to a pipe and in the second position the flow path through the valve member (20) is substantially transverse to the pipe.

## Patentansprüche

1. Ventilteil (20) für ein Ventil vom Kugelventiltyp, mit:
einem Gehäuse (27) mit einem Strömungsdurchlass (24) und zwei Gruppen von Befestigungseinrichtungen (28) auf entgegengesetzten Seiten;
wobei das Ventilteil (20) eine Dichtfläche (36) auf mindestens einer von dem Strömungsdurchlass (24) beabstandeten Seite aufweist; und
einer Einrichtung (28) an dem Ventilteil (20) zum Zusammengreifen mit einem Antriebsmechanismus (28), um das Drehen des Ventilteils (20) in dem Ventil zu ermöglichen,
**dadurch gekennzeichnet, dass**
das Ventilteil (20) mindestens zwei Teile (22, 23) umfasst, von denen jedes eine Gruppe von Vorsprüngen (46) aufweist, die derart ausgebildet sind, dass sie zur Bildung des Ventilteils (20) schnappend an den Gehäusebefestigungseinrichtungen (28) angreifen.

2. Ventilteil (20) nach Anspruch 1, bei dem mindestens zwei Teile (22, 23) identisch sind.

3. Ventilteil (20) nach Anspruch 1 oder Anspruch 2, bei dem das Ventilteil (20) zwei entgegengesetzte Dichtflächen (36) aufweist.

4. Ventilteil (20) nach einem der vorhergehenden Ansprüche, bei dem die mindestens zwei Teile (22, 23) halbkugelförmige Schalen sind.

5. Ventilteil (20) nach einem der vorhergehenden Ansprüche, bei dem das Gehäuse (27) ferner einen Rohrbereich aufweist, um einen glatten Strömungsweg zu bilden.

6. Ventilteil (20) nach einem der vorhergehenden Ansprüche, bei dem die wenigstens zwei Teile (22, 23) im Bereich der oder jeder Dichtfläche (36) eine konstante Materialdicke aufweisen, um der Dichtfläche (36) Glätte zu verleihen.

7. Ventilteil (20) nach einem der vorhergehenden Ansprüche, bei dem die mindestens zwei Teile (22, 23) zum Kapseln/Umschließen des Gehäuses (27) ausgebildet sind.

8. Ventilteil (20) nach einem der vorhergehenden Ansprüche, bei dem das Gehäuse (27) ferner Vorsprungseinrichtungen (32) auf entgegengesetzten Seiten des Gehäuses für eine formschlüssige Festlegung jedes der mindestens zwei Teile (22, 23) aufweist.

9. Ventilteil (20) nach Anspruch 8, bei dem die Vorsprungseinrichtungen (32) Strukturen vom X-Typ sind.

10. Ventilteil (20) nach Anspruch 8 oder Anspruch 9, bei dem jedes der mindestens zwei Teile (22, 23) eine Ausnehmung (31) aufweist, die zum Angreifen an den Vorsprungeinrichtungen (32) ausgebildet ist, um die Übertragung von Drehkräften von dem Gehäuse (27) auf die Teile (22, 23) zu unterstützen.

11. Ventilteil (20) nach einem der vorhergehenden Ansprüche, bei dem die mindestens zwei Teile (22, 23) und das Gehäuse (27) durch Spritzgießen hergestellt sind.

12. Ventil (10) vom Kugelventiltyp mit einem Einlass und einem Auslass mit einem Ventilteil (20) nach einem der vorhergehenden Ausführungsbeispiele, bei dem ein Kugelventilteil (20) zum Drehen zwischen einer ersten Position und einer zweiten Position in dem Ventil (10) ausgebildet ist, wobei in der ersten Position der Strömungsweg durch das Ventilteil (20) im wesentlichen koaxial zu einem Rohr verläuft, und der Strömungsweg durch das Ventilteil (20) in der zweiten Position im wesentlichen quer zum Rohr verläuft.

## Revendications

1. Elément de vanne (20) pour une vanne du type formant robinet à boisseau sphérique comprenant :
un cadre (27) présentant un passage d'écoulement (24) et
ayant deux ensembles de moyens de fixation (28) sur des côtés opposés ;
l'élément de vanne (20) comportant une surface d'étanchéité (36) sur au moins un côté espacé dudit passage d'écoulement (24) ; et
des moyens (28) sur l'élément de vanne (20) pour la mise en prise avec un mécanisme d'entraînement (26) pour permettre la rotation de l'élément de vanne (20) dans la vanne ;
**caractérisé en ce que**
ledit élément de vanne (20) comprend au moins deux parties (22, 23) présentant chacune un ensemble de pattes (46) aptes à s'engager dans ledit moyen de fixation de cadre (28) selon un agencement à encliquetage pour former ledit é 1 ément de vanne (20).

2. Elément de vanne (20) selon la revendication 1, où au moins deux parties précitées (22, 23) sont identiques.

3. Elément de vanne (20) selon l'une des revendications 1 ou 2, où ledit élément de vanne (20) comprend une paire de surfaces d'étanchéité opposées (36).

4. Elément de vanne (20) selon l'une des revendications précédentes, dans lequel au moins deux parties précitées (22, 23) sont des coques hémisphériques.

5. Elément de vanne (20) selon l'une des revendications ci-dessus, où le cadre (27) comprend en outre une portion de tube afin de réaliser un chemin d'écoulement régulier.

6. Elément de vanne (20) selon l'une des revendications précédentes, où au moins deux parties précitées (22, 23) dans la région de la ou chaque surface d'étanchéité (36) sont réalisées en une épaisseur de matériau constante pour obtenir une régularité de la surface d'étanchéité (36).

7. Elément de vanne (20) selon l'une des revendications précédentes, où au moins deux parties précitées (22, 23) sont conçues pour encapsuler ledit cadre (27).

8. Elément de vanne (20) selon l'une des revendications précédentes, où ledit cadre (27) comprend en outre un moyen de projection (32) sur les côtés opposés du cadre en vue d'une localisation positive de chacune d'au moins deux parties précitées (22, 23).

9. Elément de vanne (20) selon la revendication 8, où lesdits moyens de projection (32) sont des structures du type en X.

10. Elément de vanne (20) selon l'une des revendications 8 ou 9, où chacune d'au moins deux parties précitées (22, 23) présente un évidement (31) apte à venir en prise avec ledit moyen de projection (32) pour contribuer au transfert de forces de rotation du cadre (27) aux parties (22, 23).

11. Elément de vanne (20) selon l'une des revendications précédentes, où au moins deux parties précitées (22, 23) et le cadre (27) sont fabriquées par moulage par injection.

12. Vanne (10) du type de robinet à boisseau sphérique incluant une entrée et une sortie incluant un élément de vanne (20) tel que décrit dans l'un quelconque des modes de réalisation ci-dessus, où un élément de robinet à boisseau sphérique (20) est conçu pour tourner entre une première position et une deuxième position dans la vanne (10), où dans ladite première position, un chemin d'écoulement à travers l'élément de vanne (20) est sensiblement coaxial à un tuyau, et dans la deuxième position, le chemin d'écoulement à travers l'élément de vanne (20) est sensiblement transversal au tuyau.
